# EUROPÄISCHE PATENTSCHRIFT

(11) **EP 0 432 552 B1**
(45) Veröffentlichungstag und Bekanntmachung des Hinweises auf die Patenterteilung: **24.08.1994**
(21) Anmeldenummer: 90122491.5
(22) Anmeldetag: 26.11.1990
(51) Int. Cl.: F16K 31/385, F16K 11/18

(54) **Sanitäre Armatur**
Sanitary valve
Vanne sanitaire

(30) Priorität: 13.12.1989 CH 4482/89
(43) Veröffentlichungstag der Anmeldung: 19.06.1991
(73) Patentinhaber: KWC AG, CH-5726 Unterkulm (CH)
(72) Erfinder: Hochstrasser, Ferdinand, CH-5105 Auenstein (CH)
(74) Vertreter: Patentanwälte Schaad, Balass, Menzl & Partner AG

(56) Entgegenhaltungen:
- EP-A- 312 781
- DE-A- 2 902 410
- FR-A- 2 334 037
- US-A- 2 616 710

## Beschreibung

Die vorliegende Erfindung betrifft eine sanitäre Armatur gemäss dem Oberbegriff des Anspruchs 1.

Eine Armatur dieser Art ist aus der EP-A-0 312 781 bekannt. Sie weist ein Absperrventil mit einem membranförmigen Verschlussteil auf, welches mit einem ortsfesten ringartigen Ventilsitz zusammenwirkt. Um den Ventilsitz herum verläuft ein gegen das Verschlussteil hin offener Rennkanal, der mit einem Einlass für das Wasser verbunden ist. Der Ventilsitz begrenzt einen Ausströmweg, der die Verbindung zu einem Auslass herstellt. Bezüglich des Verschlussteils ist auf der dem Ventilsitz gegenüberliegenden Seite ein Vorsteuerraum vorhanden, der über einen kleinen Durchlass im Verschlussteil mit dem Ringkanal strömungsverbunden ist. Im Bereich der Austrittsöffnung weist das Verschlussteil einen Steuerdurchlass auf, der vorsteuerraumseitig vom Hilfsventil begrenzt ist. Der an den Steuerdurchlass angrenzende Randbereich des Verschlussteils bildet einen Hilfsventilsitz, der mit einem im Vorsteuerraum angeordneten Verschlusselement zusammenwirkt. Dieses ist mittels einer Feder in Richtung gegen den Hilfsventilsitz vorgespannt und bei geschlossenem Hilfsund Absperrventil am Hilfsventilsitz anliegend in Ruhestellung gehalten. Dabei entspricht der Druck im Innern des Vorsteuerraumes infolge des Durchlasses zum Trennkanal dem Druck des durch den betreffenden Einlass zugeführten Wassers. Infolge des Flächenunterschiedes der gegenseitigen Druckbeaufschlagung des membranförmigen Verschlussteils im Bereich des Ringkanals bzw. des Vorsteuerraumes wird das Verschlussteil auf den Ventilsitz gepresst. Der Steuerdurchlass ist von einem stösselartigen Uebertragungsglied durchgriffen, an dem einerends das Verschlusselement befestigt ist und welches andernends in einer Kammer endet. In der diese Kammer abschliessenden Gehäusewand sind ein Durchgang und eine Dichtung für den Stössel vorgesehen. In der Kammer ist ein mit einem Elektromotor verbundenes Getriebe untergebracht, das eine drehbare Kurvenscheibe aufweist, deren Kurve sich auf der einen Seitenfläche befindet und an dem sich das Uebertragungsglied mit seinem diesseitigen Ende abstützt. Zum Oeffnen des Ventils wird das Uebertragungsglied durch Drehen der Kurvenscheibe entgegen der Kraft der Feder vom Ventilsitz abgehoben, wodurch der Vorsteuerraum mit dem Auslass verbunden wird, was zur Folge hat, dass der Druck im Vorsteuerraum absinkt. Dadurch wird das Verschlussteil vom Ventilsitz abgehoben und die Wasserströmung vom Ringkanal in den Ausströmweg freigegeben. Da der Querschnitt des Durchlasses kleiner ist als der Ausströmquerschnitt durch den Steuerdurchlass, nimmt das Verschlussteil automatisch eine Lage in der Nähe des Verschlusselements ein, in welcher der spaltförmige Ausströmquerschnitt zwischen dem Hilfsventilsitz und dem Verschlusselement im wesentlichen dem Strömungsquerschnitt des Durchlasses entspricht. Durch das Verstellen der Lage des Verschlusselementes mittels der Antriebsanordnung wird somit die pro Zeiteinheit durchfliessende Wassermenge eingestellt.

Eine weitere Armatur ist in der DE-A-29 02 410 offenbart. Das Ventil und Hilfsventil sind in ähnlicher Art und Weise aufgebaut wie in der oben beschriebenen Armatur. In den rohrartigen Steuerdurchlass des Verschlussteils greift ein stösselartiges Uebertragungsglied ein, das andernends in eine Kammer einer Antriebsanordnung eingreift. Die Kammerwand weist ebenfalls einen Durchlass und eine Dichtung für das Uebertragungsglied auf. Eine Drucktaste der Antriebsanordnung ist in Ruhestellung vorgespannt, in welcher sie vom Betätigungsglied beabstandet ist. Das Hilfsventil und Ventil sind dabei zu. Beim Verschieben der Drucktaste in eine Aktivstellung läuft diese auf das Uebertragungsglied auf und stösst dieses in Richtung gegen das Verschlusselement, wodurch dieses vom Hilfsventilsitz abgehoben wird und somit das Ventil öffnet. Durch eine Kurvensteuerung wird die Drucktaste in Aktivstellung gehalten, aus der sie erst nach erneutem Drücken durch Federkraft wieder in die Ruhestellung zurückbewegt werden kann. Unter Federkraft verschliesst dann das Verschlusselement den Steuerdurchlass, was zur Folge hat, dass auch das Ventil selbsttätig schliesst.

Weiter sind Armaturen im Handel erhältlich, die für das Warm- und Kaltwasser je eine eigene hydraulisch betätigbare Ventilanordnung aufweisen. Die Ventile und Hilfsventile dieser Ventilanordnungen sind im wesentlichen gleich ausgebildet wie bei den weiter oben beschriebenen Armaturen, wobei aber die Antriebsanordnung Elektromagnete aufweist, die zum Oeffnen der Ventile erregt werden, um die in den Vorsteuerräumen vorhandenen Verschlusselemente in eine Offenstellung zu ziehen, in welcher sie die Steuerdurchlässe in den Verschlusselementen freigeben, wodurch wiederum infolge der Druckänderung das Verschlussteil vom Ventilsitz abgehoben wird und die Wasserströmung freigibt. Bei ganz geöffnetem Ventil und in Offenstellung gehaltenem Verschlusselement bleibt das Hilfsventil vollständig geöffnet, um sicherzustellen, dass der Druck vorsteuerraumseitig immer kleiner ist als der Druck auf der anderen Seite des Verschlussteils, um das Absperrventil sicher ganz offen zu halten. Zum Sperren des Wasserflusses werden die Elektromagnete entregt, so dass die Verschlusselemente unter der Kraft der entsprechenden Druckfedern an den Hilfsventilsitzen zur Anlage kommen, was zur Folge hat, dass der Druck in den Vorsteuerräumen ansteigt. Dadurch werden die Verschlussteile in Richtung gegen die Ventilsitze hinbewegt, bis sie an diesen anliegen und den Wasserfluss sperren. Dabei werden die Verschlusselemente von den Druckfedern an den Ventilsitzen in Anlage gehalten. Von den Ventilsitzen führt je ein Ausströmweg zu einem Mischventil. Mit diesem wird die durch jedes Absperrventil fliessende Wassermenge eingestellt, um die Temperatur des durch einen Auslass die Armatur verlassenden Mischwassers zu regulieren. Diese Armatur ist aufwendig in der Konstruktion.

Es ist deshalb eine Aufgabe der vorliegenden Erfindung, eine gattungsgemässe Armatur zu schaffen, die ohne Durchführungen und entsprechende Dichtungen für ein Uebertragungsglied der Antriebsanordnung auskommt.

Diese Aufgabe wird durch eine gattungsgemässe Armatur gelöst, die die Merkmale des kennzeichnenden Teiles des Anspruchs 1 aufweist.

Das Verschlusselement ist mittels einer Antriebsanordnung in eine Begrenzungsstellung zwischen der Ruhe- und der Offenstellung bringbar und dort festhaltbar. Durch diese Massnahme regelt das Hilfsventil den Druck im Steuerkreis selbsttätig derart, dass das Ventil nur eine der Begrenzungsstellung entsprechende Wassermenge durchfliessen lässt. Infolge der Relativbewegung zwischen dem festgehaltenen Verschlusselement und dem mit dem Verschlussteil des Ventils mitbewegten Hilfsventilsitz, wird in Abhängigkeit von der Lage des Verschlussteils der freie Querschnitt zwischen dem Verschlusselement und dem Hilfsventilsitz und somit der Druck im Steuerkreis geregelt.

Eine dauernd unter Druck stehende dynamische Dichtung für ein mit dem Verschlusselement zusammenwirkendes Uebertragungsglied der Antriebsanordnung ist vermieden.

Eine besonders bevorzugte und äusserst einfache Armatur ist im Anspruch 8 angegeben. Eine gemeinsame Antriebsanordnung für beide Ventile benötigt äusserst wenig Energie.

Bei einer besonders bevorzugten Ausbildungsform der Armatur gemäss Anspruch 11 kann mittels einer einzigen An- triebsanordnung in einer Mischarmatur sowohl die Temperatur des Mischwassers als auch die ausfliessende Mischwassermenge eingestellt werden.

Weitere bevorzugte Ausbildungsformen der vorliegenden Erfindung sind in den weiteren abhängigen Ansprüchen angegeben.

Die Erfindung wird nun anhand eines in der Zeichnung dargestellten Ausführungsbeispiels näher beschrieben. Es zeigen rein schematisch:
- Fig. 1: einen Schnitt durch einen Teil einer Mischarmatur;
- Fig. 2 und 3: Schnitte durch die Mischarmatur entlang den Linien II-II bzw. III-III der Fig. 1;
- Fig. 4 bis 6: einen Ausschnitt der Fig. 2 bei unterschiedlichen Einstellungen der Mischarmatur; und
- Fig. 7: einen Schnitt durch die Mischarmatur gemäss Fig. 2 bei einer Einstellung gemäss Fig. 6.

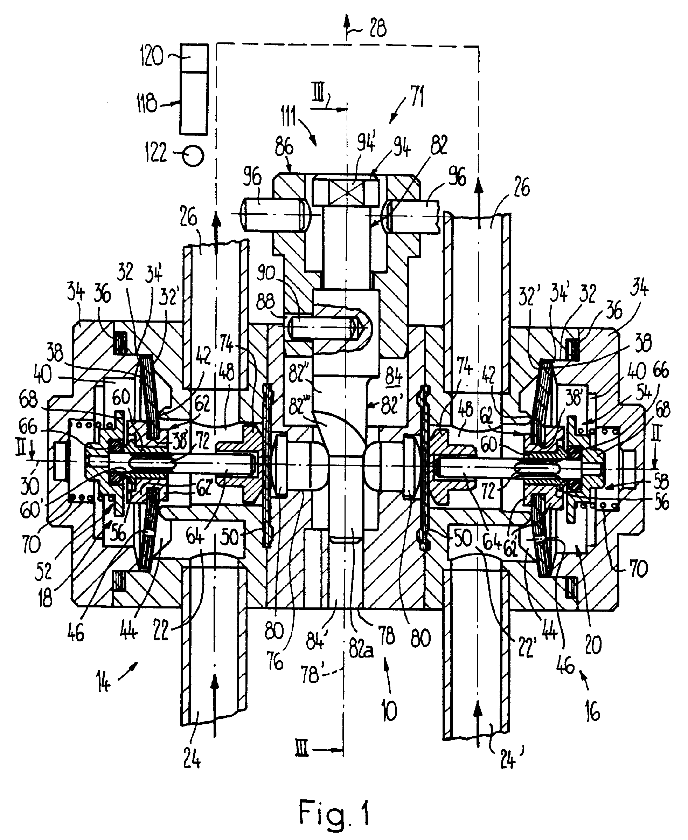

Die Figuren 1 bis 3 zeigen einen Teil einer elektrisch gesteuerten sanitären Mischarmatur. Solche Armaturen werden üblicherweise als Waschbeckenarmaturen verwendet.

Die Armatur weist einen zentralen Antriebsblock 10 und zwei identisch ausgebildete, gegengleich mittels Schrauben 12 an diesem seitlich befestigte Ventilblöcke 14 und 16 auf. In jedem Ventilblock 14, 16 ist ein hydraulisch betätigbares Ventil 18, 20 vorgesehen. Das Ventil 18 ist über einen Einlass 22 im Ventilblock 14 mit einer Zuflussleitung 24 für Kaltwasser strömungsverbunden, während das andere Ventil 20 durch einen entsprechenden Einlass 22′ im Ventilblock 16 mit einer Zuflussleitung 24′ für Warmwasser in Verbindung steht. Auslasseitig sind die beiden Ventile 18, 20 mittels Leitungen 26 mit einem nur schematisch angedeuteten, gemeinsamen Wasserauslaufkopf 28 verbunden (Fig. 1).

Jeder Ventilblock 14, 16 weist eine zur Achse 30 der beiden Ventile 18, 20 im wesentlichen rotationssymmetrische, abgestufte Ausnehmung 32 auf, welche nach Aussen hin von einem hutförmigen in die Ausnehmung 32 eingreifenden Deckel 34 wasserdicht verschlossen ist. Die entsprechende zwischen dem Ventilblock 14, 16 und Deckel 34 angeordnete, ringförmige Dichtung ist mit 36 bezeichnet. Im Innern der Ausnehmung 32 ist ein diese überspannendes membranförmiges Verschlussteil 38 vorgesehen, welches aus gummielastischem Material besteht und im Umfangsbereich zwischen einem Absatz 32′ in der Ausnehmung 32 und dem in die Ausnehmung 32 eingreifenden Ende 34′ des Deckels 34 eingeklemmt gehalten ist. Das Verschlussteil 38 und der Deckel 34 begrenzen einen Vorsteuerraum 40. Auf der vom Vorsteuerraum 40 abgewandten Seite des Verschlussteils 38 ist ein mit diesem zusammenwirkender, kreisringförmiger Ventilsitz 42 vorgesehen, um welchen herum ein mit dem betreffenden Einlass 22 bzw. 22′ verbundener und gegen das Verschlussteil 38 hin offener Ringkanal 44 verläuft. Im Verschlussteil 38 ist ein kleiner Durchlass 46 angebracht, der den Vorsteuerraum 40 mit dem Ringkanal 42 und somit dem Einlass 22, 22′ verbindet. Der dem Ventilsitz 42, von aussen gesehen, gegen innen folgende und vom Ventilsitz 42 umrandete Teil der Ausnehmung 32 bildet einen Auslass 48 bzw. 48′, welcher in die entsprechenden zur Achse 30 ungefähr rechtwinklig wegführenden Leitungen 26 mündet. Am antriebsblockseitigen Ende ist die Ausnehmung 32 von einer scheibenförmigen Dichtmembran 50 aus gummielastischem Material begrenzt, die am Umfangsbereich zwischen dem Antriebsblock 10 und jedem entsprechenden Ventilblock 14, 16 eingeklemmt ist.

In jedem Vorsteuerraum 40 ist ein dem betreffenden Ventil 18, 20 zugeordnetes Hilfsventil 52, 54 vorgesehen. Jedes dieser Hilfsventile 52, 54 weist einen Hilfventilsitz 56 und ein damit zusammenwirkendes Verschlusselement 58 auf. Der Hilfsventilsitz 56 ist an einer zur Achse 30 ungefähr konzentrischen, hohlzylinderförmigen Hülse 60 angeformt, die in ein ringförmiges Versteifungsglied 62 eingesetzt ist, welches das membranförmige Verschlussteil 38 in einer zentralen Oeffnung 38′ durchdringt und an diesem durch in radialer Richtung nach aussen abstehende Flanken 62′ dicht gehalten ist.Der durch den Durchlass 46 mit dem Einlass 22, 22′ verbundene Vorsteuerraum 40, das Hilfsventil 52, 54 und der mit dem Auslass 48, 48′ verbundene Steuerdurchlass 60′ bilden einen hydraulischen Steuerkreis für die hydraulischen betätigbaren Ventile 18, 20.

Durch die Hülse 60 hindurch verläuft ein Betätigungsstift 64, auf welchem im Vorsteuerraum 40 das Verschlusselement 58 festsitzt. Dieses weist einen mit dem Hilfsventilsitz 56 zusammenwirkenden O-Ring 66 auf, der auf dem Betätigungsstift 64 sitzt und von einem an diesem befestigten, hutförmigen Halteteil 68 entlang dem Umfang und auf der dem Hilfsventilsitz 56 abgekehrten Seite umgriffen ist. Auf dem Halteteil 68 stützt sich das eine Ende einer Druckfeder 70 ab, die andernends am Deckel 34 anliegt und das Verschlusselement 58 gegen den Hilfsventilsitz 56 drückt. Die Druckfeder 70 ist Teil einer Antriebsanordnung 71. Der Querschnitt des Betätigungsstiftes 64 ist kleiner als die lichte Weite der Hülse 60, sodass zwischen der Hülse 60 und dem Betätigungsstift 64 immer ein Steuerdurchlass 60′ frei ist, dessen Querschnittfläche grösser ist als der Durchlass 46, welcher den Ringkanal 44 mit dem Vorsteuerraum 40 verbindet. Im Bereich der Hülse 60 weist der Betätigungsstift 64 Längsnuten 72 auf, die nach dem Abheben des Verschlusselementes 58 ab dem Hilfsventilsitz 52, 54 den Strömungsquerschnitt zwischen der Hülse 60 und dem Betätigungsstift 64 zusätzlich vergrössern. Bei vom Hilfsventilsitz 56 abgehobenem Verschlusselement 58 ist der Vorsteuerraum 40 mit dem Auslass 48 bzw. 48′ strömungsverbunden. Bei am Hilfsventilsitz 56 anliegenden O-Ring 66 des Verschlusselementes 58 ist diese Verbindung unterbrochen.

Zwischen der Dichtmembran 50 und dem diesseitigen Ende des Betätigungsstiftes 64 ist ein den Endbereich des Betätigungsstiftes 64 umfassendes und gegen die Dichtmembran 50 hin geschlossenes, tellerförmiges Uebertragungselement 74 vorgesehen, das beim Auslenken der Dichtmembran 50, in Richtung gegen das Ventil 18, 20 hin, diese Auslenkung an den Betätigungsstift 64 und das Hilfsventil 52, 54 überträgt, ohne dass dabei in der Dichtmembran 50 aus gummielastischem Material unzulässig grosse Flächenpressungen auftreten.

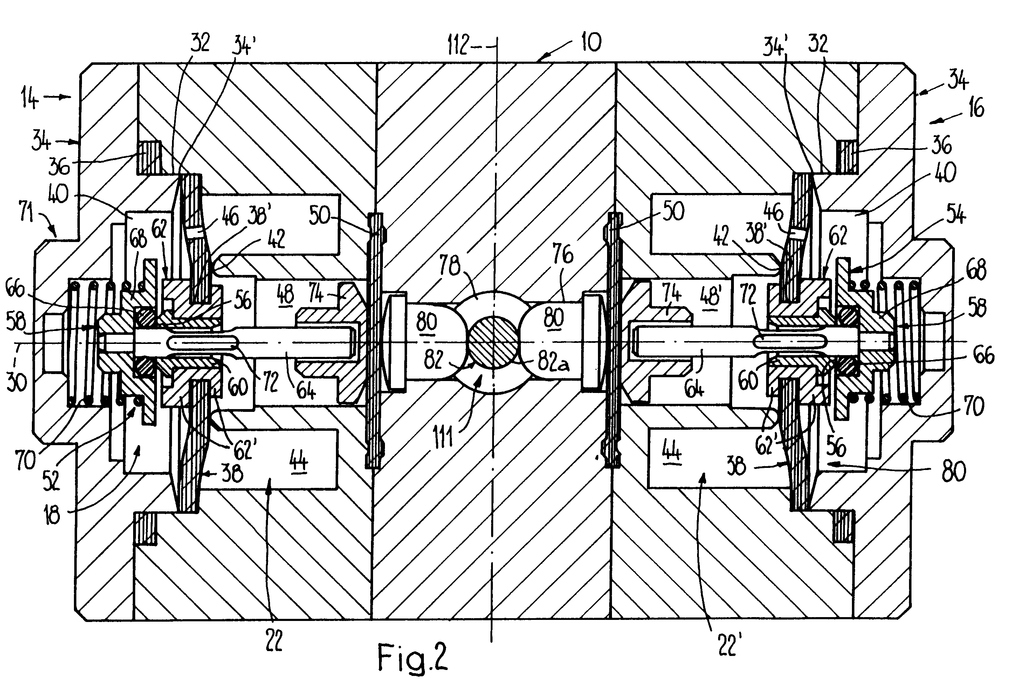

In den Fig. 1 und 2 ist das Verschlussteil 38 am Ventilsitz 42 und das Verschlusselement 58 am Hilfsventilsitz 58 anliegend gezeigt. Die Ventile 18, 20 und Hilfsventil 52, 54 sind somit geschlossen. Dabei befindet sich das Verschlusselement 58 in seiner Ruhestellung.

Der Antriebsblock 10 weist zwei sich rechtwinklig kreuzende, abgestufte, zylinderförmige Durchgangsöffnungen 76, 78 auf, wobei die konzentrisch zur Achse 30 verlaufende Durchgangsöffnung 76 von den beiden Dichtmembranen 50 begrenzt ist. In der Durchgangsöffnung 76 sind zwei Gleitschuhe 80 in Richtung der Achse 30 verschiebbar geführt, welche einerends je an einer Dichtmembran 50 anliegen und andernends in die andere Durchgangsöffnung 78 hineinragen. An ihren axialen Enden sind die beiden Gleitschuhe 80 konvex geformt, um einerseits beim Ausbiegen der Dichtmembran 50 diese gleichmässig zu beanspruchen und andererseits ein problemloses gleiten an einem in die Durchgangsöffnung 78 eingreifenden Steuerstift 82 zu ermöglichen.

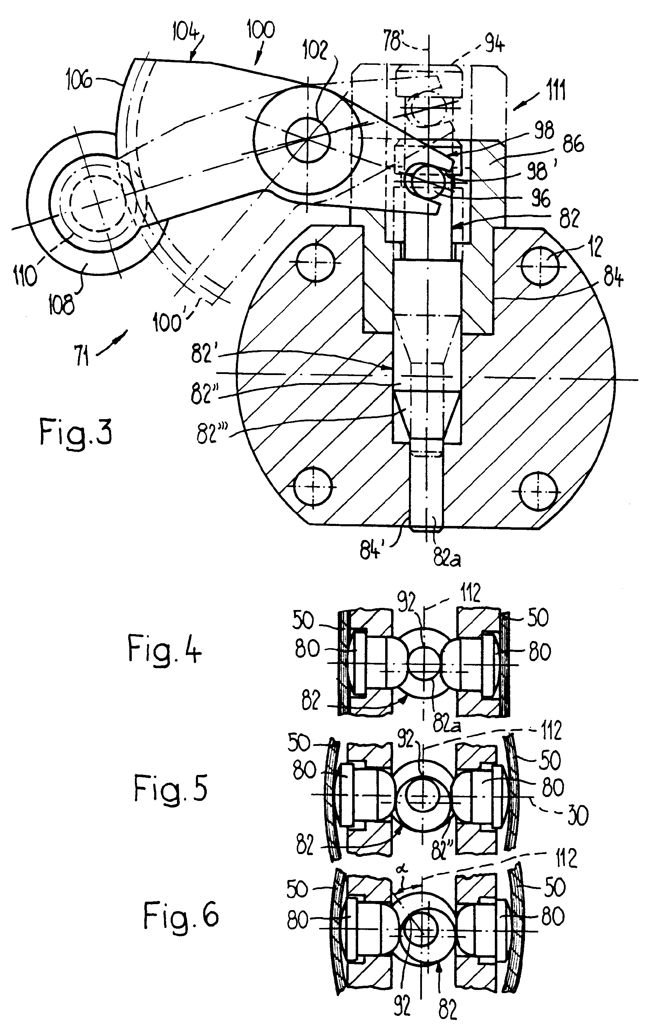

Die Achse 78′ der rotationssymmetrischen, abgestuften Durchgangsöffnung 78 steht senkrecht zur Achse 30 und der Steuerstift 82 ist um diese Achse 78′ drehbar und in Richtung dieser Achse 78′ verschiebbar gelagert. In einem in den Figuren 1 und 3 oberhalb der beiden Gleitschuhe 80 gezeigten Teil 84 der Durchgangsöffnung 78 mit der grössten lichten Weite ist eine Gleithülse 86 in Richtung der Achse 78′ verschiebbar geführt. Der durch die Gleithülse 86 hindurchgeführte Steuerstift 82 ist an dieser in Richtung der Achse 78′ verschiebefest aber um ungefähr 180° um die Achse 78 verdrehbar gelagert. Zu diesem Zweck weist die Gleithülse 86 einen in Umfangsrichtung verlaufenden und sich über ca. 180° erstreckenden Schlitz 88 auf, in welchem ein im Steuerstift 82 verankerter, in radialer Richtung verlaufender Bolzen 90 geführt ist.

Mit dem von der Gleithülse 86 entfernten, zylindrischen Endbereich 82a greift der Steuerstift 82 in einen weiteren, unterhalb der Gleitschuhe 80 angeordneten Teil 84′ mit der kleinsten lichten Weite der Durchgangsöffnung 78 ein und ist in diesem drehbar und in Richtung der Achse 78′ verschiebbar geführt. Im Bereich zwischen diesem zur Achse 78′ konzentrischen Endbereich 82a und der Gleithülse 86 ist der Mittelbereich 82′ des Steuerstiftes 82 zur Achse 78′ nicht rotationssymmetrisch ausgebildet. Dieser Mittelteil 82′ weist einen zylinderförmigen, zur Achse 78′ aber exzentrischen Bereich 82˝ und einen Uebergangsbereich 82‴ auf, der in der Form eines schiefen Kegels den Teil 82˝ mit dem Endbereich 82a verbindet. Dabei ist der zylinderförmige, exzentrische Teil 82˝ bezüglich dem im Durchmesser kleineren Endbereich 82a derart ausgebildet, dass sie eine gemeinsame Mantellinie aufweisen, die gerade ist und parallel zur Achse 78′ verläuft. Diese Mantellinie ist in den Figuren 4 bis 6 mit 92 bezeichnet. Die Oberfläche des Steuerstiftes 82 im Mittelbereich 82′ und Endbereich 82a bildet eine Steuerfläche für die Gleitschuhe 80.

Am gleithülsenseitigen, oberen Ende weist der Steuerstift 82 einen Kopf 94 auf, an welchem Angriffsflächen 94′ angeformt sind, um mittels eines entsprechenden, nicht dargestellen Betätigungsgriffes den Steuerstift 82 in die gewünschte Lage zu verdrehen.

In die Gleithülse 86 sind zwei einander diametral gegenüberliegende und in radialer Richtung über die Gleithülse 86 vorstehende Mitnehmerbolzen 96 eingesetzt. Wie dies insbesondere aus der Fig. 3 ersichtlich ist, ist die Gleithülse 86 in ihrem oberen Endbereich von einem gabelförmigen Arm 98 eines zweiarmigen Antriebshebels 100 umgriffen. In den freien Endbereichen weist der gegabelte Arm 98 Schlitze 98′ auf, welche von den Mitnehmerbolzen 96 durchgriffen sind. Der Antriebshebel 100 ist an einer rechtwinklig zur Achse 78′ verlaufenden Welle 102 schwenkbar gelagert und weist an seinem anderen Arm 104 ein zur Welle 102 konzentrisches Zahnsegment 106 auf, das mit einem von einem Antriebsmotor 108 angetriebenen Ritzel 110 kämmt. Der Antriebshebel 100 ist mittels des Antriebsmotors 108 von einer strichpunktiert gezeigten Ruhelage 100′ in eine in ausgestrichenen Linien dargestellte Arbeitslage und wieder zurück verschwenkbar. Dabei bewegt sich die Uebertragungshülse 74 zusammen mit dem Steuerstift 82, in Richtung der Achse 78′, von der ebenfalls strichpunktiert angedeuteten, entsprechenden Ruhelage in eine in ausgezogenen Linien angegebene, entsprechende Arbeitslage und wieder zurück.

Die Gleitschuhe 80, der Steuerstift 82, die Gleithülse 86, der Antriebshebel 100, das Ritzel 110 und der Antriebsmotor 108 bilden einen Antriebsteil 111 der Antriebsanordnung 71.

In den Figuren 4 bis 6 ist ein Teil des Antriebsblocks 10 in drei verschiedenen Stellungen des Steuerstiftes 82 dargestellt. In der in der Fig. 4 gezeigten Stellung befindet sich der Steuerstift 82 in seiner oberen, in der Fig. 3 strichpunktiert angedeuteten Ruhelage. Dabei liegen die Gleitschuhe 80 am zur Achse 78′ konzentrischen Endbereich 82a des Steuerstiftes 82 an. Beide Dichtmembrane 50 sind nich ausgebogen. In dieser Stellung des Steuerstiftes 82 und dieser Lage der Gleitschuhe 80 sind die Ventile 18, 20 und Hilfsventile 52, 54 geschlossen, wie dies in den Figuren 1 und 2 dargestellt ist.

In der Fig. 5 befindet sich der Steuerstift 82 in seiner in der Fig. 3 mit ausgezogenen Linien gezeigten unteren Endlage. Dabei liegen die Gleitschuhe 80 am zur Achse 78′ exzentrischen, zylinderförmigen Teil 82˝ an. Da sich die Mantellinie 92 in einer senkrecht auf die Achse 30 stehenden Ebene 112 befindet, in welcher auch die Achse 78′ des Steuerstiftes 82 liegt, sind die beiden Gleitschuhe 80 um dasselbe Mass in Richtung der Achse 30 weiter von der Ebene 112 entfernt als in Fig. 4. Die Dichtmembranen 50 sind gegengleich um den selben Betrag ausgebogen.

In der Fig. 6 befindet sich der Steuerstift 82 ebenfalls in seiner unteren Arbeitsstellung. Die Mantellinie 92 ist aber um den Winkel α aus der Ebene 112 im Gegenuhrzeigersinn herausverdreht. Dies hat nun zur Folge, dass sich der in der Fig. 6 links dargestellte Gleitschuh 80 in einer Zwischenstellung zwischen den beiden in den Figuren 4 und 5 gezeigten Stellungen befindet. Der in der Fig. 6 rechts dargestellte Gleitschuh 80 ist hingegen in Richtung der Achse 30 gegenüber Fig. 5 noch weiter angehoben.

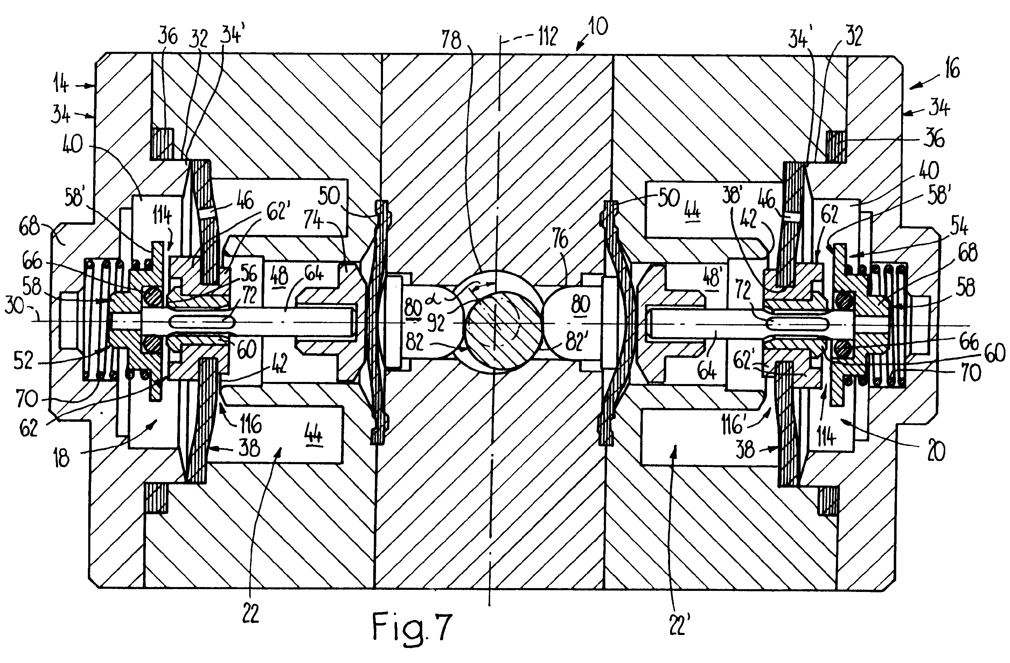

Fig. 7 zeigt die Armatur im selben Schnitt wie Fig. 2 aber mit dem Steuerstift 82 in einer Stellung gemäss Fig. 6. Der in den Figuren 6 und 7 links dargestellte Gleitschuh 80 ist durch Verdrehen des Steuerstiftes 82 geringfügig angehoben, wogegen der rechts dargestellte Gleitschuh 80 in Richtung der Achse 30 stärker ausgelenkt ist. Der Hub in Richtung der Achse 30 der Gleitschuhe 80 wird durch die Dichtmembranen 50 an die Uebertragungselemente 74 und durch diese über den Betätigungsstift 64 an das betreffende Verschlusselement 58 übertragen, so dass sich die beiden Verschlusselemente 58, wie in der Fig. 7 gezeigt, in zwei unterschiedlichen Begrenzungsstellungen 58′ befinden. In diesen Begrenzungsstellungen 58′ ist somit das Verschlusselement 58 gegenüber der Ruhestellung, in welchem in geschlossenem Ventil 18 bzw. 20 das Verschlusselement 58 am Hilfventilsitz 56 anliegt, entsprechend dem Hub und der Verdrehlage des Steuerstifts 82 angehoben. Zwischen dem O-Ring 66 und dem Hilfsventilsitz 56 ist ein mit 114 bezeichneter Spalt gezeigt, wodurch der Vorsteuerraum 40 mit dem betreffenden Auslass 48 bzw. 48′ verbunden ist. Der Strömungsquerschnitt zwischen den O-Ringen 66 und den entsprechenden Hilfsventilsitzen 56 entspricht ungefähr dem Querschnitt der Durchlässe 46, welche die Vorsteuerräume 40 mit den entsprechenden Einlässen 22 bzw. 22′ verbinden. Die beiden Verschlussteile 38 der Ventile 18, 20 sind von den entsprechenden Ventilsitzen 42 abgehoben und geben einen mit 116 bzw. 116′ bezeichneten Ausflussspalt frei, durch welchen hindurch die Einlässe 22, 22′ mit den Auslässen 48, 48′ verbunden sind. Der Ausflussspalt 116 des dem Kaltwasser zugeordneten Ventils 18 ist enger als der Ausflussspalt 116′ des dem Warmwasser zugeordneten Ventils 20. Die beiden Ventile 18, 20 sind somit entsprechend der Verschiebung der beiden Gleitschuhe 80 in Richtung der Achse 30 nach aussen und somit gemäss der Begrenzungsstellung 58′ der Verschlusselemente 58 teilweise geöffnet.

Der Vollständigkeit halber sei erwähnt, dass die in den Figuren 1 bis 7 gezeigte Armatur eine in der Figur 1 schematisch dargestellte elektronische Steuerung 118 mit einem Sensor 120 aufweist. Die Steuerung 118 ist von einer Batterie 122 gespeist und steuert den in der Figur 3 gezeigten Antriebsmotor 108. Der Sensor 120 erkennt, wenn sich zu waschende Hände im Bereich des Waschbeckens bzw. des Wasserauslaufkopfs 118 befinden.

Wäre der Steuerstift 82 bezüglich der Ebene 112 im Gegenuhrzeigersinn um 90° verdreht, so wäre das Verschlusselement 58 des in der Fig. 7 rechts dargestellten Hilfsventils 54 in die Offenstellung angehoben, in welcher das Ventil 20 ganz geöffnet wäre.

Die obenbeschriebene Armatur arbeitet wie folgt. Befinden sich keine zu waschenden Hände im Erkennungsbereich des Sensors 120 befindet sich der Antriebshebel 100 in der in der Figur 3 strichpunktiert angedeuteten Ruhelage 110′. Dabei ist der Steuerstift 82 in die in den Figuren 1 bis 4 gezeigte Ruhelage angehoben. Die Gleitschuhe 80 liegen am Endbereich 82a des Steuerstiftes 82 an. Die Hilfsventile 52, 54 und Ventile 18, 20 sind geschlossen. Die Verschlusselemente 58 befinden sich in ihrer Ruhestellung.

Der Druck in den Vorsteuerräumen 40 entspricht infolge der Verbindung durch den Durchlass 46 mit dem Ringkanal 44 dem Druck des Wassers im betreffenden Einlass 22 bzw. 22′. Das Verschlussteil 38 wird mit einer Kraft, die proportional zum Unterschied des Druckes im Vorsteuerraum 40 und Auslass 48, 48′ so wie zur Differenz der druckbeaufschlagten Flächen des Verschlussteils 38 im Bereich des Ringkanals 44 und dem Vorsteuerraum 40 ist, gegen den Ventilsitz 42 gepresst. Zu dieser dem Wasserdruck proportionalen Kraft addiert sich noch die Kraft der Druckfeder 70, welche ebenfalls über das Verschlusselement 58 auf das Verschlussteil 38 einwirkt. Diese Druckfeder 70 presst somit das Verschlusselement 58 gegen den Hilfsventilsitz 56, welches zusätzlich noch mit einer Kraft, die der vom Hilfsventilsitz 56 begrenzten Fläche und der Differenz des Druckes im Vorsteuerraum 40 und Auslass 48, 48′ proportional ist, an den Hilfsventilsitz 56 gedrückt ist. Dabei ist zu beachten, dass das freie Ende des Betätigungsstiftes 64 von der Uebertragungshülse 74 geringfügig beabstandet ist um sicherzustellen, dass der O-Ring 66 in der Ruhestellung des Verschlusselementes 58 am Hilfsventilsitz 56 anliegt. Die Auslässe 48, 48′ sind über die Leitungen 26 und den Wasserauslaufkopf 28 mit der Umgebung verbunden, sodass der auslassseitige Druck bei geschlossenen Ventilen 18, 20 dem Umgebungsdruck entspricht.

Werden nun zu waschende Hände in den Erkennungsbereich des Sensors 120 gebracht, steuert die elektronische Steuerung 118 den Antriebsmotor 108 solange an, bis der Antriebshebel 110 in die in der Figur 3 mit ausgezogenen Linien dargestellte Arbeitslage verschwenkt ist. Dadurch wird der Steuerstift 82 in die in den Figuren 3, 5 bzw. 6 mit ausgezogenen Linien dargestellte untere Endlage gebracht. Dies hat nun zur Folge, dass die Verschlusselemente 58 entsprechend der Verdrehlage α des Steuerstiftes 82 aus der Ruhestellung in die Begrenzungsstellung 58′ angehoben werden. Dadurch öffnen sich die beiden Hilfsventile 52, 54, was zur Folge hat, dass die Vorsteuerräume 40 nun mit den Auslässen 22, 22′ strömungsverbunden sind. Da der freie Strömungsquerschnitt im Steuerdurchlass 60′ zwischen der Hülse 60 und dem Betätigungsstift 64 grösser ist, als der freie Querschnitt des Durchlasses 46 sinkt nun der Druck in den Vorsteuerräumen 40, was zur Folge hat, dass die Verschlussteile 38 von den entsprechenden Ventilsitzen 42 abgehoben werden. Die Stömung von den Ringkanälen 44 durch die Ausflussspalten 116, 116′ in die Auslässe 48, 48′ wird dadurch freigegeben. Durch die Bewegung der Verschlussteile 38 in Richtung gegen die sich in der Begrenzungsstellung 58′ befindenden und dort von der Druckfeder 70 und dem Antriebsteil 111 festgehaltenen Verschlusselemente 58 hat zur Folge, dass der Spalt 114 zwischen den den Hilfsventilsitzen 56 und den O-Ringen 66 abnimmt. Sobald nun der freie Strömungsquerschnitt im Spalt 114 ungefähr gleich gross ist, wie der Querschnitt der Durchlässe 46 gleicht sich der Druck im Vorsteuerraum 40 und auf der anderen Seite des Verschlussteils 38 aus, sodass das Verschlussteil 38 selbstregelnd unter Freihaltung eines kleinen Spaltes 114 in einer vom Verschlusselement 58 vorgegebenen Lage gehalten ist. Die durch die Ausflussspalten 116, 116′ pro Zeiteinheit fliessende Wassermenge wird somit durch die Begrenzungsstellung 58′ der Verschlusselement 58 vorgegeben. Das durch die Ventile 18, 20 nun fliessende Kalt- bzw. Warmwasser wird durch die Leitungen 26 dem gemeinsamen Wasserauslaufkopf 28 zugeführt, wo das Warm- und Kaltwasser sich vermischen und als Mischwasser aus dem Wasserauslaufskopf 28 ausläuft. Die Verdrehlage α des Steuerstiftes 82 bestimmt somit ungefähr gegengleich die durch jedes Ventil 18, 20 pro Zeiteinheit fliessende Kaltwasser- bzw. Warmwassermenge, wodurch die Temperatur des Mischwassers festgelegt ist. Durch entsprechendes Verdrehen des Steuerstiftes 82 kann somit die Mischwassertemperatur eingestellt werden.

Werden nun die gewaschenen Hände aus dem Erkennungsbereich des Sensors 120 gezogen, speist die Steuerung 118 den Antriebsmotor 108 derart an, dass dieser den Antriebshebel 100 wieder in die in der Fig. 3 strichpunktiert dargestellte Ruhelage 100′ verschwenkt. Dadurch wird der Steuerstift 82 in die obere Endlage gezogen, was zur Folge hat, dass der untere Endbereich 82a in den Bereich der Gleitschuhe 80 zu liegen kommt. Die Verschlusselemente 58 sind somit nicht mehr durch den Steuerstift 82 entgegen der Kraft der Druckfeder 70 in ihrer Begrenzungsstellung 58′ gehalten, was zur Folge hat, dass die Verschlusselemente 58 durch die Kraft der Druckfedern 70 an die Hilfsventilsitze 56 zur Anlage kommen. Die Hilfsventile 52, 54 werden geschlossen. Da nun die Verbindung zwischen dem Vorsteuerraum 40 und dem Auslass 48, 48′ unterbrochen ist, steigt der Druck im Vorsteuerraum 40 langsam an, wodurch das Verschlussteil 38 unter Verkleinerung der Ausflussspalten 116, 116′ gegen die Ventilsitze 42 hin bewegt und schlussendlich an diesen zur Anlage gebracht werden. Die Ventile 18, 20 sind geschlossen. Die Druckfeder 70 sorgt dafür, dass bei dieser Bewegung des Verschlussteils 38 das Verschlusselement 58 in Anlage an Hilfsventilsitz 56 verbleibt und unterstützt zusätzlich die Bewegung des Verschlussteils 38 in Richtung gegen die Ventilsitze 42.

Befindet sich somit die Mantellinie 92 im Bereich der Ebene 112, also in der Mitte zwischen zwei Gleitschuhen 80, so werden beide Ventile 18, 20 gleich weit geöffnet, was zur Folge hat, dass gleich viel Kalt- und Warmwasser durch die entsprechenden Ventile 18, 20 fliessen kann. Die Temperatur des Mischwassers entspricht dann dem Mittelwert zwischen der Temperatur des Kalt- und Warmwassers. Ist hingegen der Steuerstift 82 um den Winkel α , wie in den Figuren 6 und 7 gezeigt, verschwenkt, wird das Ventil 18 für Kaltwasser weniger, dafür das Ventil 20 für Warmwasser mehr geöffnet, was zur Folge hat, dass die Temperatur des Mischwassers höher ist. Die totale pro Zeiteinheit ausfliessende Wassermenge des Mischwassers bleibt dabei aber unabhängig von der Verdrehlage des Steuerstiftes 82 ungefähr gleich. Wird nun durch Verdrehen des Steuerstiftes 82 die Mantellinie 92 in den Bereich des einen oder anderen Gleitschuh 80 verschwenkt, hat dies zur Folge, dass beim Verschieben des Steuerstiftes 82 in Richtung der Achse 78′ der betreffende Gleitschuh 80 nicht in Richtung der Achse 30 verschoben wird. Das betreffende Ventil 18, 20 bleibt somit geschlossen. Das andere Ventil 20 bzw. 18 wird aber voll geöffnet. In diesem Fall befindet sich das betreffende Verschlusselement 58 in Offenstellung.

Bei der in den Figuren gezeigten Armatur wird somit die gewünschte Mischwassertemperatur durch Verschwenken des Steuerstiftes 82 eingestellt. Aus der Armatur fliesst dann Mischwasser der entsprechenden Temperatur, solange sich zu waschende Hände im Erkennungsbereich des Sensors 120 befinden. Selbstverständlich kann der Steuerstift 82, beispielsweise mit einem Drehknopf verbunden sein, um die Temperatur des Mischwassers durch Verdrehen des Steuerstiftes 82 individuell zu wählen. Es ist auch denkbar, die elektronische Steuerung 118 derart auszubilden, dass der Antriebshebel 100 beim Verschwenken aus der strichpunktiert angedeuteten Ruhelage Fig. 3 in Richtung gegen die mit ausgezogenen Linien gezeigt Arbeitslage in eine Zwischenstellung verschwenkt und dort gehalten wird. Dies hat zur Folge, dass die Gleitschuhe 80 im Uebergangsbereich 82‴ an den Steuerstift 82 zur Anlage kommt. Die pro Zeiteinheit aufliessende Mischwassermenge ist somit reduziert aber die Mischwassertemperatur entspricht immernoch der betreffenden Verdrehlage des Steuerstiftes 82.

Es ist auch denkbar, die Armatur als Einhand-Hebelmischer auszubilden. Dabei wird der Steuerstift 82 mit der Uebertragungshülse 74 drehfest und hubfest verbunden. Der Antriebshebel 100 wird dann durch einen Betätigungshebel ersetzt, der am Antriebsblock 110 um die Achse 78′ drehbar und um eine Achse, der Welle 102 entsprechend, schwenkbar gelagert ist. Durch Verdrehen des Betätigungshebels um die Welle 78′ kann dann die gewünschte Temperatur und durch Verschwenken um die horizontale Achse die gewünschte Wassermenge eingestellt werden.

Im weitern kann natürlich eine Armatur nur ein einziges Ventil 18 bzw. 20 aufweisen. In diesem Fall kann erfindungsgemäss die durch das Ventil durchfliessende Wassermenge geregelt werden.

Es ist selbstverständlich auch denkbar, das Verschlusselement kolbenförmig auszubilden.

## Patentansprüche

1. Sanitäre Armatur mit wenigstens einem zum freigebbaren Sperren des Wasserflusses durch die Armatur zwischen einem Einlass (22,22′) und einem Auslass (48,48′) angeordneten, hydraulisch betätigbaren Ventil (18,20), dessen mit dem Einlass (22,22′) und dem Auslass (48, 48′) verbundener hydraulischer Steuerkreis ein Hilfsventil (52,54) mit einem mit dem Verschlussteil (38) des Ventils (18,20) mitbewegten Hilfsventilsitz (56) und einem damit zusammenwirkenden Verschlusselement (58) aufweist, mit einem auf der dem Auslass (48,48′) zugewandten Seite des Verschlussteils (38) angeordneten, mit diesem zusammenwirkenden und einen zum Auslass (48,48′) führenden Ausströmungsweg begrenzenden Ventilsitz (42) und einem auf der andern Seite angeordneten, über einen Durchlass (46) mit dem Einlass (22,22′) verbundenen und über das Hilfsventil (52,54) mit dem Auslass (48,48′) verbindbaren bzw von diesem abtrennbaren Vorsteuerraum (40), mit einem mit dem Ausströmungsweg verbundenen und vorsteuerraumseitig vom Hilfsventil (52,54) begrenzten Steuerdurchlass (60′) im Verschlussteil (38) und einer Antriebsanordnung (71) mit einem durch den Steuerdurchlass (60′) hindurchgeführten Uebertragungsglied (64), das einerseits mit dem im Vorsteuerraum (40) angeordneten Verschlusselement (58) und andererseits mit einem Antriebsteil (111) der Antriebsanordnung (71) zusammenwirkt, wobei das Verschlusselement (58) mittels der Antriebsanordnung (71) aus einer Ruhestellung, in welcher es bei geschlossenem Ventil (18,20) am Hilfsventilsitz (56) anliegt, zum vollständigen Oeffnen des Ventils (18,20) in eine Offenstellung, in welcher es bei offenem Ventil (18,20) vom Hilfsventilsitz (56) abgehoben ist, und zum nur teilweisen, einer gewünschten pro Zeiteinheit fliessenden Wassermenge entsprechenden Oeffnen des Ventils (18,20) und eine Begrenzungsstellung (58′) zwischen der Ruhe- und der Offenstellung bringbar und dort festhaltbar ist, und das Verschlussteil (38), bei sich in der Begrenzungsstellung (58′) befindendem Verschlusselement (58) selbstregelnd in einer von diesem vorgegebenen Lage gehalten ist, in welcher der Ausströmquerschnitt aus dem Vorsteurraum (40) dem Strömungsquerschnitt des Durchlasses (46) entspricht, dadurch gekennzeichnet, dass das antriebsteilseitige Ende des Uebertragungsgliedes (64) im Ausströmungsweg endet, und die den Ausströmungsweg begrenzende Wand im Bereich des Endes des Uebertragungsgliedes (64) einen membranförmigen Wandteil (50) aufweist, der zum Betätigen des Hilfsventils (52,54) mittels des Antriebsteils (111) von der dem Uebertragungsglied (64) gegenüberliegenden Seite her auf dieses einwirkend auslenkbar ist.

2. Armatur nach Anspruch 1, dadurch gekennzeichnet, dass die Begrenzungsstellung (58′) zwischen der Ruhestellung und der Offenstellung stufenlos einstellbar ist.

3. Armatur nach Anspruch 1 oder 2, dadurch gekennzeichnet, dass das Verschlussteil (38) membran- oder kolbenförmig ausgebildet ist.

4. Armatur nach einem der Ansprüche 1 bis 3, dadurch gekennzeichnet, dass die Antriebsanordnung (71) ein das Verschlusselement (58) in Richtung gegen den Hilfsventilsitz (56) vorspannendes Federelement (70) aufweist und das Verschlusselement (58) mittels des Antriebsteils (111) entgegen der Kraft des Federelements (70) verschiebbar ist.

5. Armatur nach einem der Ansprüche 1 bis 4, dadurch gekennzeichnet, dass der Ventilsitz (42) ringförmig ausgebildet ist.

6. Armatur nach einem der Ansprüche 1 bis 5, dadurch gekennzeichnet, dass das Wandteil (50) quer zur Bewegungsrichtung (30) des Uebertragungsgliedes (64) verläuft.

7. Armatur nach einem der Ansprüche 1 bis 6, dadurch gekennzeichnet, dass der Antriebsteil (111) einen bezüglich des Wandteils (50) dem Uebertragungsglied (64) gegenüberliegenden, in Betätigungsrichtung (30) des Uebertragungsgliedes (64) verschiebbaren und mit einer Steuerkurvenanordnung (82) zusammenwirkenden Gleitschuh (80) aufweist.

8. Armatur nach einem der Ansprüche 1 bis 7, gekennzeichnet durch zwei je mit einem Einlass (22,22′) für das Kalt- bzw. das Warmwasser und dem Auslass (48,48′) verbundene Ventile (18,20) zum freigebbaren Sperren des betreffenden Kalt- und Warmwasserflusses, und einer gemeinsamen Antriebsanordnung (71) für beide Ventile.

9. Armatur nach Anspruch 8, dadurch gekennzeichnet, dass die beiden Ventile (18, 20) symmetrisch zueinander mit gegeneinander gerichteten Uebertragungsgliedern (64) angeordnet und diese mittels einer gemeinsamen Steuerkurvenanordnung (82) betätigbar sind.

10. Armatur nach Anspruch 9, dadurch gekennzeichnet, dass die Steuerkurvenanordnung einen ungefähr rechtwinklig zur Betätigungsrichtung (30) der Uebertragungsglieder (64) verlaufenden und in Richtung seiner Längsachse (78′) verschiebbaren Steuerschaft (82) aufweist an dem eine, vorzugsweise kegelförmige Steuerfläche (82‴) zum Verschieben der Verschlusselemente (58) ausgebildet ist.

11. Armatur nach Anspruch 10, dadurch gekennzeichnet, dass der Steuerschaft (82) um seine Längsachse (78′) drehbar und die Steuerfläche (82′) bezüglich dieser Längsachse (78′) asymmetrisch ausgebildet ist, um durch Verdrehen des Steuerschaftes (82) die Temperatur des durch den Auslass (28) fliessenden Mischwassers und durch Verschieben des Steuerschaftes (82) die ausfliessende Menge des Mischwassers einzustellen.

## Claims

1. Sanitary fitting having at least one hydraulically operable shutoff valve (18, 20) arranged between an inlet (22, 22′) and an outlet (48, 48′) for releasable blocking of the flow of water through the fitting, the hydraulic control circuit of which shutoff valve is connected to the inlet (22, 22′) and the outlet (48, 48′) and has an auxiliary valve (52, 54) with an auxiliary valve seat (56) which is movable together with the closure part (38) of the valve (18, 20) and a closure element (58) interacting with said auxiliary valve seat, having a valve seat (42) which is arranged on the side of the closure part (38) facing the outlet (48, 48′), interacts with said closure part, and bounds an outflow path which leads to the outlet (48, 48′), and having a pilot control space (40) which is arranged on the other side, is connected to the inlet (22, 22′) via a passage (46), and can be connected to the outlet (48, 48′) and separated therefrom via the auxiliary valve (52, 54), having in the closure part (38) a control passage (60′) which is connected to the outflow path and is bounded by the auxiliary valve (52, 54) on the pilot control space side, and having a drive arrangement (71) with a transmission member (64) which is passed through the control passage (60′) and interacts, on the one hand, with the closure element (58) arranged in the pilot control space (40) and, on the other hand, with a drive part (111) of the drive arrangement (71), it being possible for the closure element (58) to be brought by means of the drive arrangement (71) out of an idle position, in which it rests on the auxiliary valve seat (56) when the valve (18, 20) is closed, for the complete opening of the valve (18, 20) into an open position, in which it is lifted from the auxiliary valve seat (56) when the valve (18, 20) is open, and to be brought into a limiting position (58′) between the idle and the open position and retained there for only partial opening of the valve (18, 20) corresponding to the desired quantity of water flowing per unit of time, and the closure part (38) being held in a self-controlling manner, when the closure element (58) is located in the limiting position (58′), in a position which is determined by said closure element and in which the outflow cross-section from the pilot control space (40) corresponds to the flow cross- section of the passage (46), characterized in that the end of the transmission member (64) on the drive-part side ends in the outflow path, and the wall bounding the outflow path has in the region of the end of the transmission member (64) a diaphragm-shaped wall part (50) which can be deflected to actuate the auxiliary valve (52, 54) by means of the drive part (111) from the side opposite the transmission member (64) acting on the latter.

2. Fitting according to Claim 1, characterized in that the limiting position (58′) is infinitely adjustable between the idle position and the open position.

3. Fitting according to Claim 1 or 2, characterized in that the closure part (38) is of diaphragm-shaped or piston-shaped design.

4. Fitting according to one of Claims 1 to 3, characterized in that the drive arrangement (71) has a spring element (70) prestressing the closure element (58) in the direction towards the auxiliary valve seat (56) and the closure element (58) is displaceable against the force of the spring element (70) by means of the drive part (111).

5. Fitting according to one of Claims 1 to 4, characterized in that the valve seat (42) is of annular construction.

6. Fitting according to one of Claims 1 to 5, characterized in that the wall part (50) runs transversely to the direction of movement (30) of the transmission member (64).

7. Fitting according to one of Claims 1 to 6, characterized in that the drive part (111) has a guide shoe (80) which is located opposite the transmission member (64) relative to the wall part (50), is displaceable in the operating direction (30) of the transmission member (64) and interacts with a control cam arrangement (82).

8. Fitting according to one of Claims 1 to 7, characterized in that it has two valves (18, 20) each connected to an inlet (22, 22′) for the cold and the hot water and to the outlet (48, 48′) for releasable blocking of the relevant cold and hot water flow and a common drive arrangement (71) for both valves.

9. Fitting according to Claim 8, characterized in that the two valves (18, 20) are arranged symmetrically to each other with transmission members (64) directed toward each other and can be actuated by means of a common control cam arrangement (82).

10. Fitting according to Claim 9, characterized in that the control cam arrangement has a control shaft (82) which extends approximately at right angles to the operating direction (30) of the transmission members (64) and is displaceable in the direction of its longitudinal axis (78′), on which control shaft a preferably conical control surface (82‴) is formed for displacing the closure elements (58).

11. Fitting according to Claim 10, characterized in that the control shaft (82) can be rotated about its longitudinal axis, (78′) and the control surface (82′) is of asymmetrical construction in relation to this longitudinal axis (78′) in order to adjust the temperature of the mixed water flowing through the outlet (28) by rotating the control shaft (82) and to adjust the outflowing quantity of the mixed water by displacing the control shaft (82).

## Revendications

1. Robinetterie sanitaire, avec au moins une soupape (18, 20) à action hydraulique, disposée entre une admission (22, 22′) et une évacuation (48, 48′) en vue de bloquer, de façon libérable, le courant d'eau passant dans la robinetterie, soupape dont le circuit de commande hydraulique, relié à l′admission (22, 22′) et à l'évacuation (48, 48′), comporte une soupape auxiliaire (52, 54) avec un siège (56), déplacé conjointement avec l'opercule (38) de la soupape (18, 20), et un élément de fermeture (58) coopérant avec le siège (56), avec un siège de soupape (42) disposé du côté de l'opercule (38) tourné vers l'évacuation (48, 48′), coopérant avec l'opercule et délimitant un chemin de sortie d'écoulement menant à l'évacuation (48, 48′) et une enceinte de pilotage (40) disposée de l'autre coté, relié, par un passage (46) à l'admission (22, 22′) et pouvant être relié à, ou isolé de, l'évacuation (48, 48′) par la soupape auxiliaire (52, 54), avec un passage de commande, ménagé dans la partie opercule (38), relié au chemin d'écoulement de sortie et délimité du coté de l'enceinte de pilotage par la soupape auxiliaire (52, 54) et un dispositif d'entraînement (71) avec un organe de transmission (64) guidé à travers le passage de commande (60') et coopérant, d'une part, avec l'élément de fermeture (58) disposé dans l'enceinte de pilotage (40) et, d'autre part, avec une partie entraînement (111) du dispositif d'entraînement (71), l'élément de fermeture (58) pouvant, au moyen du dispositif d'entraînement (71), être passé d'une position de repos dans laquelle il appuie sur le siège de soupape auxiliaire (56) lorsque la soupape (18, 20) est fermée, à une position d'ouverture donnant une position d'ouverture complète de la soupape (18, 20), dans laquelle il est soulevé du siège de soupape auxiliaire (56) lorsque la soupape (18, 20) est ouverte, et pouvant être placé et fixé dans une position de limitation (58′) entre la position de repos et la position d'ouverture, pour définir une ouverture seulement partielle de la soupape (18, 20), dans laquelle ne s'écoule par unité de temps qu'une quantité d'eau souhaitée, et l'opercule (38) étant maintenu, lorsque l'élément de fermeture (58) se trouve dans la position de limitation (58′), dans une position prédéterminée par celui-ci, avec effet d'autorégulation, position dans laquelle la section transversale de sortie d'écoulement hors de l'enceinte de pilotage (40) correspond à la section transversale d'écoulement du passage (46), caractérisée en ce que l'extrémité située du coté de la partie d'entraînement de l'organe de transmission (64) finit dans le chemin d'évacuation d'écoulement et la paroi délimitant le chemin de sortie d'écoulement présentant, dans la zone de l'extrémité de l'organe de transmission (64), une partie de paroi (50) en forme de membrane qui, lors de l'actionnement de la soupape auxiliaire (52, 54), peut être déformée au moyen de la partie d'entraînement (111) depuis le coté opposé à l'organe de transmission (64), en agissant sur celui-ci.

2. Robinetterie selon la revendication 1, caractérisée en ce que la position de limitation (58′) est réglable de façon continue progressive entre la position de repos et la position d'ouverture.

3. Robinetterie selon la revendication 1 ou 2, caractérisée en ce que l'opercule (38) est réalisé sous forme de membrane ou de piston.

4. Robinetterie selon l' une des revendications 1 à 3, caractérisée en ce que le dispositif d'entraînement (71) présente un élément élastique (78) sur la précontrainte de l'élément de fermeture (58) dans la direction du siège de soupape auxiliaire (56), et l'élément de fermeture (58) étant déplaçable à l'encontre de la force de l'élément élastique (70), au moyen de la partie d'entraînement (111).

5. Robinetterie selon l'une des revendications 1 à 4, caractérisée en ce que le siège de soupape (42) est annulaire.

6. Robinetterie selon l'une des revendications 1 à 5, caractérisée en ce que la partie de paroi (50) s'étend transversalement par rapport à la direction de déplacement (30) de l'organe de transmission (64).

7. Robinetterie selon l'une des revendications 1 à 6, caractérisée ce que la partie d'entraînement (111) présente un patin de coulissement (60) placé relatif à la partie de paroi (50) en regard de l'organe de transmission (64), déplaçable dans la direction d'actionnement (30) de l'organe de transmission (64) et coopérant avec un agencement à came de commande (62).

8. Robinetterie selon l'une des revendications 1 à 7, caractérisée par deux soupapes (18, 20), reliées chacune à une admission (22, 22′), destinée à l'eau froide ou chaude, et à l'évacuation (48, 48′), en vue de bloquer de façon libérable le flux concerné d'eau froide et chaude et par un agencement d'entraînement (71) commun aux deux soupapes.

9. Robinetterie selon la revendication 8, caractérisée ce que les deux soupapes (18, 20) sont disposées symétriquement l'une à l'autre avec des organes de transmission (64) orientés l'un vers l'autre et ceux-ci pouvant être actionnés au moyen d'un agencement à came de commande (82) commun.

10. Robinetterie selon la revendication 9, caractérisée en ce que l'agencement à came de commande présente une tige formant came (82) s'étendant à peu près perpendiculairement par rapport à la direction d'actionnement (30) des organes de transmission (64) et pouvant être déplacée dans la direction de son axe longitudinal (78′) et tige sur laquelle une surface de commande (82‴), de préférence conique, est réalisée pour déplacer les éléments de fermeture (58).

11. Robinetterie selon la revendication 10, caractérisée en ce que la tige de commande (82) est réalisée de façon à pouvoir tourner autour de son axe longitudinal (78′) et la surface de commande (82′) étant asymétrique par rapport à cet axe longitudinal (78′), afin de régler, par rotation de la tige de commande (82), la température de l'eau mitigée s'écoulant par l'évacuation (28) et par déplacement de la tige de commande (82) la quantité d'eau mitigée sortant.
